# EUROPEAN PATENT SPECIFICATION

(11) **EP 4 606 212 B1**
(45) Date of publication and mention of the grant of the patent: **11.03.2026**
(21) Application number: 24159571.9
(22) Date of filing: 26.02.2024
(51) Int. Cl.: A01G 3/025, B25G 1/04

(54) **TELESCOPIC HAND TOOL, IN PARTICULAR A TELESCOPIC PRUNER**
TELESKOPISCHES HANDWERKZEUG, INSBESONDERE TELESKOPPFLAUMMASCHINE
OUTIL À MAIN TÉLESCOPIQUE, EN PARTICULIER SÉCATEUR TÉLESCOPIQUE

(43) Date of publication of application: 27.08.2025
(73) Proprietor: Husqvarna AB, 561 82 Huskvarna (SE)
(72) Inventor: Rudolf, Peter, 89250 Senden (DE)
(74) Representative: Finkele, Rolf

(56) References cited:
- EP-B1- 2 022 320
- CN-U- 206 341 625
- CN-U- 210 746 173
- CN-U- 216 492 145
- GB-A- 2 605 369
- JP-A- 2000 334 181
- US-B1- 10 328 568

## Description

The present invention relates to a telescopic hand tool. In particular, the present invention relates to a telescopic pruner.

Telescopic hand tools with two tubes and an integrated pull cord or pulling means are well known. In many telescopic hand tools, the pull cords are visible and guided in grooves formed in the tube. Telescopic hand tools with three tubes have usually pull cords running outside of the tube. Three tubes allow a small minimum length and a large maximum length of the telescopic hand tool. CN210746173U, CN206341625U, US10328568B1, CN216492145U, EP2022320B1, GB2605369A and JP2000334181 disclose different examples of telescopic hand tools consisting of multiple tubes.

It is an object of the present invention to provide a telescopic hand tool with at least three tubes, wherein the pull cord or pulling means is arranged substantially inside the telescopic hand tool, and wherein said telescopic hand tool is easy to operate by the user.

The object of the present invention is achieved by a telescopic hand tool according to claim **1.**

The present invention provides a telescopic hand tool, in particular for a telescopic pruner, wherein the telescopic hand tool comprises:
- an outer tube,
- at least one intermediate tube slidable within the outer tube,
- an inner tube slidable within the intermediate tube,
- at least one tool head connected or connectable to the front end of the inner tube,
- a back handle detachably arranged at the back end of the outer tube,
- a pull sleeve slidable along the outer tube,
- a pulling means having a flat cross-section and arranged substantially inside the tubes, wherein the one end portion of the pulling means is connected to a fixation point at the front end of the outer tube, while the other end portion of the pulling means is connected to the pull sleeve,
- a further pulling means extending between a joint arranged at the pulling means and the back handle,
- a number of deflection pulleys arranged at the back ends of the tubes and at the front ends of the outer tube and the intermediate tube, wherein the deflection pulleys are provided for redirecting the pulling means,
- a hoist pulley slidable within the inner tube and connected to the tool head by a rod, a cord or the like, wherein the hoist pulley is provided for redirecting the pulling means, and
- an elongated groove formed in the outer side of the outer tube and extending parallel to said outer tube,
- wherein first and second portions of the pulling means are arranged and guided to one another within the groove, and
- wherein the first portion of the pulling means is connected to the pull sleeve by a fixation.

The pulling mean according to the present invention may particularly be a pull band or a pull cord. Preferably, the pulling means may be formed as a flat pull band having a rectangular cross-sectional shape. Alternatively, the pulling means may be formed as a circular cord.

The pulling means is moveable either directly by the pull sleeve or via the further pulling means by the back handle. Thus, the tool head may be operated either by the pull sleeve or the back handle. If the back handle is pulled, then the pull sleeve remains in its place. Thereby, two deflection pulleys respectively deflections compared to the pull sleeve actuation with solely one integral pulling means, may be omitted. Thereby, a back handle operation shows, particularly significant, less friction losses. One of the first and second portions of the pulling means is covered by the other, so that only one portion of the pulling means is visible. The arrangement of the deflection pulleys allow that the other portions of the pulling means are arranged inside the tubes. The deflection pulleys at the outer tube allow that the first and second portions of the pulling means are moved into opposite directions within the groove.

Preferably, the first portion of the pulling means extends between the pull sleeve and a first deflection pulley arranged at the front end of the outer tube, while the second portion of the pulling means extends between the first deflection pulley and a second deflection pulley arranged at or close to the back end of the outer tube.

Further, the joint may be arranged in a third portion of the pulling means, wherein said third portion of the pulling means extends between the second deflection pulley and the hoist pulley, wherein preferably the joint is at least one of a seam, a knot, an additional fastening part, and a glue point.

According to an exemplary embodiment of the invention, the joint may be at least one of a seam, a knot, an additional fastening part, and a glue point. Forming the joint as a seam or a glue point may provide the advantage that such a joint is reliable and easy to manufacture. An additional fastening part may have the advantage that is may be easily replaced and easy to maintain. A knot may have the advantage that it may be easily opened and moved.

In particular, the first portion of the pulling means is fixed to the pull sleeve by at least one clamping connection.

Preferably, an insulation tube encloses at least partially the outer tube, wherein the groove is formed within said insulation tube, and wherein preferably the groove has a rectangular cross-section corresponding with the overall cross-section of the first and second portions of the pulling means arranged one to another. For example, the insulation tube is made of plastics, which allows an easy production. Alternatively, the outer tube and the insulation tube are formed as a single-piece part.

Further, an end sleeve may be arranged at the back end of the outer tube, wherein preferably the back handle is detachably mounted at the end sleeve.

Additionally, a stop cam may be attached at the outer side of the outer tube, wherein the pull sleeve is slidable between said stop cam and the end sleeve.

Moreover, the telescopic hand tool may comprise at least two telescopic interfaces, wherein a first telescopic interface connects the outer tube and the intermediate tube, while a second telescopic interface connects the intermediate tube and the inner tube.

Providing the telescopic hand tool with the two telescopic interfaces according to the present invention may provide the advantage that the tube guidance between two tubes is free of relative movement to each other respectively backlash. Further, providing the two telescopic interfaces may inhibit that the material of the two tubes rub directly on each other. Hence, advantageously, fretting may be inhibited. Additionally, the first telescopic interface and/or the second telescopic interface comprise(s) the deflection for the length adaption during telescopic as well as an end stop such that the two tubes may not be entirely separated from each other. Arranging the deflection pulley and the guiding pulley in the telescopic interface may provide the advantage that a pulling means distance may be optimized, and hence a size of the telescopic interface may be minimized. Further, the deflection of the pulling means according to the invention may provide the advantage that a pull sleeve for cutting may be used.

In particular, a plastic tube encloses partially the outer tube and covers a part of the groove, wherein preferably the plastic tube extends between the first telescopic interface and the stop cam. The plastic tube minimises the visible portion of the pulling means.

Further, the deflection pulleys and/or the hoist pulley may be provided for redirecting the pulling means by about 180 degrees.

In particular, a further guiding pulley is dedicated to at least one deflection pulley, so that the pulling means takes an S-shaped course between the further guiding pulley and the corresponding deflection pulley. The combination of deflection pulley and corresponding guiding pulley may allow a decreased, preferably minimized, distance between the different portions of the pulling means. Thereby, a cross-section of the respective tube may be decreased, preferably minimized.

Additionally, at least one foam element may be provided for guiding the pulling means, wherein said foam element corresponds with one deflection pulley, so that the pulling means is guided between the foam element and the deflection pulley. The foam element contributes to a reliable movement of the pulling means.

Preferably, the foam element is arranged with regard to the deflection pulley, so that a curved section of the pulling means is guided between the foam element and the deflection pulley.

In particular, the foam element corresponds with the second deflection pulley, so that the pulling means is guided between the foam element and the second deflection pulley.

Additionally, the telescopic hand tool may comprise one or more further intermediate tubes, wherein the further intermediate tube includes at least two deflection pulleys arranged at the front end and back end, respectively, of said further intermediate tube, and wherein the further intermediate tube is arranged between the outer tube and intermediate tube and/or between the intermediate tube and the inner tube. The telescopic hand tool may be expanded by the further intermediate tubes. The ratio between the maximum and minimum length of the telescopic hand tool increases.

According to an alternative embodiment of the present invention, the further pulling means may be omitted, wherein the pulling means extends between the fixing point at the front end of the outer tube and the back handle, and wherein the back handle and the pull sleeve are connected to the same portion of the pulling means.

Novel and inventive features of the present invention are set forth in the appended claims.

The present invention will be described in further details with reference to the accompanied drawings, in which
- Figure 1: illustrates a schematic sectional side view of a telescopic hand tool according to a first embodiment of the present invention,
- Figure 2: illustrates a schematic enlarged partial sectional side view of a telescopic interface of the telescopic hand tool according to the first embodiment of the present invention,
- Figure 3: illustrates a schematic enlarged partial sectional side view of a pull sleeve of the telescopic hand tool according to the first embodiment of the present invention,
- Figure 4: illustrates a schematic cross-sectional view of the telescopic hand tool according to the first embodiment of the present invention,
- Figure 5: illustrates a schematic enlarged partial sectional side view of an end sleeve of the telescopic hand tool according to the first embodiment of the present invention,
- Figure 6: illustrates a schematic sectional side view of the telescopic hand tool with an operated back handle according to a second embodiment of the present invention,
- Figure 7: illustrates a schematic enlarged sectional side view of the telescopic hand tool according to the second embodiment of the present invention,
- Figure 8: illustrates a schematic cross-sectional view of the telescopic hand tool according to the second embodiment of the present invention, and
- Figure 9: illustrates a schematic sectional side view of the telescopic hand tool with an operated pull sleeve according to the second embodiment of the present invention.

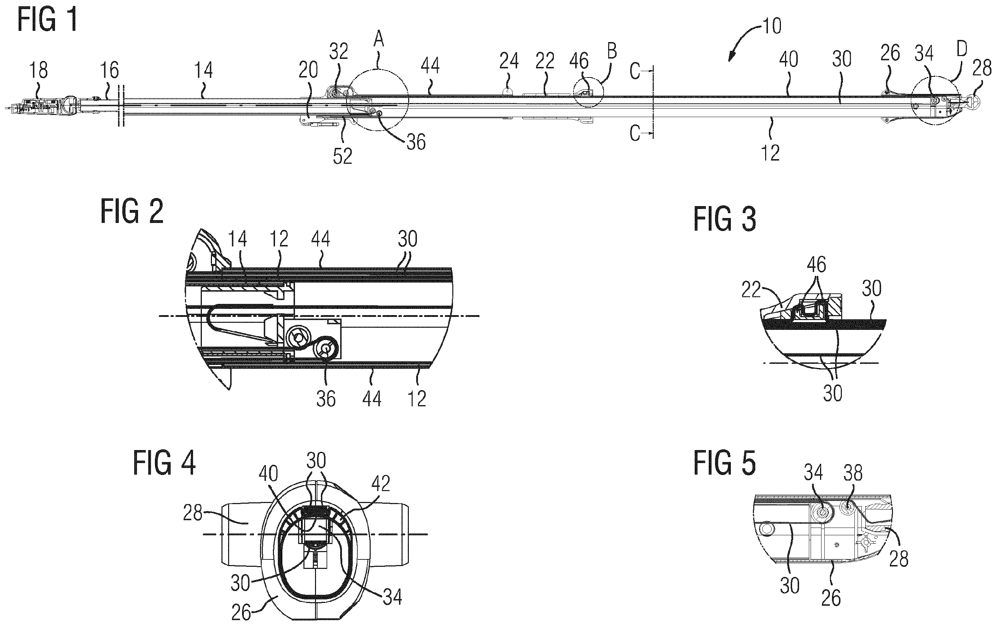

Figure 1 illustrates a schematic sectional side view of a telescopic hand tool 10 according to a first embodiment of the present invention. In this example, the telescopic hand tool 10 is a telescopic pruner.

The telescopic hand tool 10 comprises an outer tube 12, an intermediate tube 14 and an inner tube 16. The inner tube 16 is slidable within the intermediate tube 14 along their common longitudinal axis. In turn, the intermediate tube 14 is slidable within the outer tube 12 along their common longitudinal axis.

A tool head 18 is arranged at the front end of the telescopic hand tool 10. The tool head 18 is connected to the front end of the inner tube 16. In this example, the tool head 18 includes a pair of pruning shears. A first telescopic interface 20 is arranged at the front end of the outer tube 12. The first telescopic interface 20 connects the outer tube 12 and the intermediate tube 14. In a similar way, a second telescopic interface is arranged at the front end of the intermediate tube 14. Said second telescopic interface is not shown in Figure 1. The intermediate tube 14 and the inner tube 16 are connected by the second telescopic interface.

A pull sleeve 22 encloses the outer tube 12. The pull sleeve 22 is slidable along the outer tube 12. A stop cam 24 is attached at the outer side of the outer tube 12 in order to limit the sliding section of the pull sleeve 22. An end sleeve 26 encloses the back end of the outer tube 12. The pull sleeve 22 is slidable between the stop cam 24 and the end sleeve 26 along the outer tube 12. A back handle 28 is detachably mounted at the end sleeve 26.

A pulling means 30 is arranged substantially inside the tubes 12, 14 and 16. The one end of the pulling means 30 is connected to the back handle 28, while the other end of the pulling means 30 is connected to a fixation point 52. The fixation point 52 is arranged at the front end of the outer tube 12 and/or at the first telescopic interface 20. The pulling means 30 has a flat cross-section. A first portion of the pulling means 30 extends from the back handle 28 to a first deflection pulley 32 arranged within or at the first telescopic interface 20. The first deflection pulley 32 is arranged at the outside of the outer tube 12. The first portion of the pulling means 30 is connected to the pull sleeve 22 by a fixation 46. The first deflection pulley 32 redirects the pulling means 30.

A second portion of the pulling means 30 extends from the first deflection pulley 32 to a second deflection pulley 34 arranged within the end sleeve 26. The first and second portions of the pulling means 30 extend parallel to each other within a groove 40, wherein large-area sides of the first and second portions are facing each other. The groove 40 is formed at the outer side of the outer tube 12 or in the insulation tube 42 as illustrated in Figure 4. Further, the groove 40 extends parallel to the longitudinal axis of said outer tube 12. The second deflection pulley 34 redirects the pulling means 30 again.

A third portion of the pulling means 30 extends from the second deflection pulley 34 to a hoist pulley, which is not shown in Figure 1. The hoist pulley is moveable inside the inner tube. The hoist pulley is connected to the tool head 18 by a rod, a cord, or a further band. The hoist pulley redirects the pulling means 30 again.

A fourth portion of the pulling means 30 extends from the hoist pulley to a third deflection pulley. The third deflection pulley is arranged at the back end of the inner tube 16. The third deflection pulley is not shown in Figure 1. The third deflection pulley redirects the pulling means 30 again.

A fifth portion of the pulling means 30 extends from the third deflection pulley to a fourth deflection pulley arranged at the front end of the intermediate tube 14. The fourth deflection pulley is not shown in Figure 1. The fourth deflection pulley redirects the pulling means 30 again.

A sixth portion of the pulling means 30 extends from the fourth deflection pulley to a fifth deflection pulley 36. The fifth deflection pulley 36 is arranged at the back end of the intermediate tube 14. The fifth deflection pulley 36 redirects the pulling means 30 again. An end portion of the pulling means 30 is connected to the front end of the outer tube 12 and/or at the first telescopic interface 20 at the fixation point 52.

The first portion and the second portion of the pulling means 30 are guided within the groove 40 formed at the outer side of the outer tube 12 and extending parallel to the longitudinal axis of the outer tube 12. The first portion and the second portion of the pulling means 30 are arranged to one another, so that only the first portion of the pulling means 30 is visible, while the second portion of the pulling means 30 is covered by the first portion.

The third portion of the pulling means 30 extends inside the outer tube 12, the intermediate tube 14 and the inner tube 16 along the longitudinal axis of the outer tube 12, the intermediate tube 14 and the inner tube 16. The fourth portion of the pulling means 30 extends inside the inner tube 16 along the longitudinal axis of the inner tube 16. The fifth portion and the sixth portion of the pulling means 30 extend between the inner tube 16 and the intermediate tube 14 along their longitudinal axes.

Figure 2 illustrates a schematic enlarged partial sectional side view of the telescopic interface 20 of the telescopic hand tool 10 according to the first embodiment of the present invention. Figure 2 shows section A in Figure 1.

The first telescopic interface 20 is arranged at the front end of the outer tube 12 and connects the outer tube 12 and the intermediate tube 14. The fifth deflection pulley 36 is arranged within the telescopic interface 20 and at the back end of the intermediate tube 14.

A plastic tube 44 extends between the telescopic interface 20 and the stop cam 24. The plastic tube 44 encloses the outer tube 12 between the telescopic interface 20 and the stop cam 24. The plastic tube 44 covers the groove 40 between the telescopic interface 20 and the stop cam 24. Thus, the pulling means 30 is not visible between the telescopic interface 20 and the stop cam 24.

Figure 3 illustrates a schematic enlarged partial sectional side view of the pull sleeve 22 of the telescopic hand tool 10 according to the first embodiment of the present invention. Figure 3 shows section B in Figure 1.

The first portion of the pulling means 30 is connected to the pull sleeve 22 by the fixation 46, so that the first portion of the pulling means 30 is directly moved by sliding the pull sleeve 22. The other portions of the pulling means 30 are indirectly moved by sliding the pull sleeve 22.

Figure 4 illustrates a schematic cross-sectional view of the telescopic hand tool 10 according to the first embodiment of the present invention. Figure 4 shows the cross-section along the plane C-C in Figure **1****.**

An insulation tube 42 encloses the outer tube 12. The groove 40 is formed within said insulation tube 42. Alternatively, the groove 40 may be formed within the outer side of the outer tube 12 as illustrated in Figure **1****.** The first portion and the second portion of the pulling means 30 are guided in the groove 40, wherein the first portion of the pulling means 30 covers the second portion of the pulling means 30. Only the first portion of the pulling means 30 is visible between the pull sleeve 22 and the end sleeve 26. Alternatively, the insulation tube 42 and the outer tube 12 are formed as a single-piece part.

Figure 5 illustrates a schematic enlarged sectional side view of the end sleeve 26 of the telescopic hand tool 10 according to the first embodiment of the present invention. Figure 5 shows section D in Figure 1.

The second deflection pulley 34 is arranged within the end sleeve 26 and redirects the pulling means 30. Further, a guiding pulley 38 is arranged within the end sleeve 26. The guiding pulley 38 causes a small distance between the first portion and the second portion of the pulling means 30, so that friction between the first portion and the second portion of the pulling means 30 is avoided.

Preferably, a further guiding pulley is dedicated to each deflection pulley 32, 34 and 36, wherein the pulling means 30 takes an S-shaped course between each deflection pulley 32, 34, 36 and the corresponding further guiding pulley.

If the back handle 28 is pulled in the first embodiment of the present invention, the pull sleeve 22 moves simultaneously with said back handle 28. Further, if the pull sleeve 22 is moved, the pulling means 30 builds respectively forms a sling between the pull sleeve 22 and the end sleeve 26. An operational force of the back handle 28 shows substantially the same frictional losses as an operational force of the pull sleeve 22.

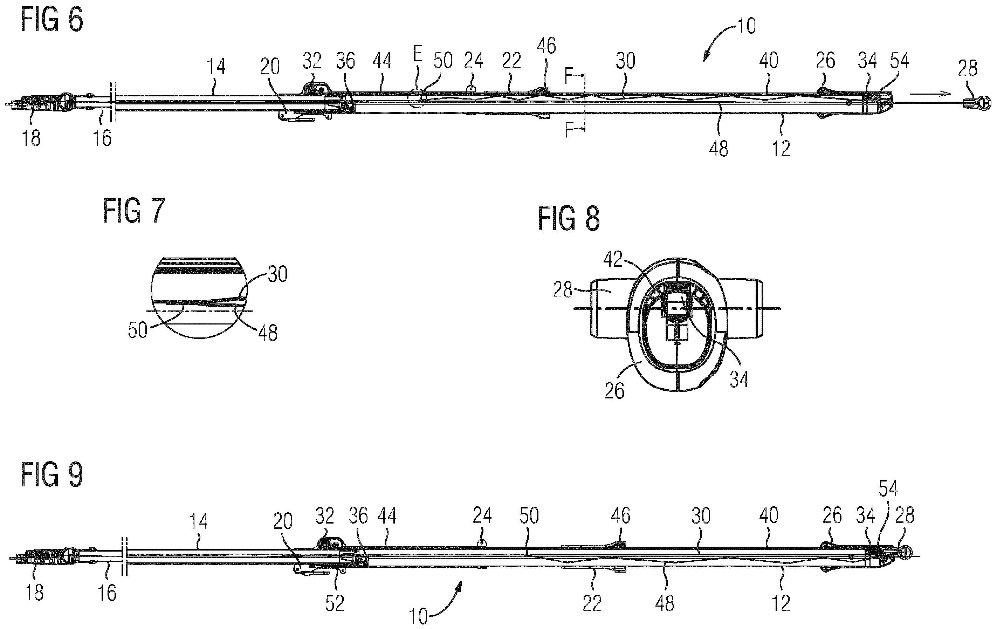

Figure 6 illustrates a schematic sectional side view of the telescopic hand tool 10 with operated back handle 28 according to a second embodiment of the present invention.

The telescopic hand tool 10 according to the second embodiment is substantially identical to the telescopic hand tool 10 of the first embodiment. Additionally, the telescopic hand tool 10 of the second embodiment includes a further pulling means 48. A first end of the further pulling means 48 is connected to the third portion of the pulling means 30. A second end of the further pulling means 48 is connected to the back handle 28. The portion of the pulling means 30 between the pull sleeve 22 and the back handle 28 is omitted in the second embodiment.

In this example, the first end of the further pulling means 48 is connected by a seam 50 to the third portion of the pulling means 30. Alternatively, the first end of the further pulling means 48 is glued, connected by an additional fastening part, or knotted on the third portion of the pulling means 30.

In Figure 6 the back handle 28 is pulled away from the end sleeve 26 in order to operate the tool head 18. Thus, the further pulling means 48 is stretched. The portion between the seam 50 and the end portion of the pulling means 30 is also stretched. In contrast, the portion between the seam 50 and the second deflection pulley 34 of the pulling means 30 is folded. The pull sleeve 22 remains in its place if the back handle 28 is pulled.

Further, a foam element 54 is provided for guiding the pulling means 30 and for fixing the pulling means 30 on the deflection pulley 34. In this example, said foam element 54 corresponds with the second deflection pulley 34, so that the pulling means 30 is guided between the foam element 54 and the second deflection pulley 34.

Preferably, the foam element 54 is arranged with regard to the second deflection pulley 34 in such a way, that a curved section of the pulling means 30 is guided between the foam element 54 and the second deflection pulley 34. The foam element 54 contributes to a reliable movement of the pulling means 30. Optionally, the deflection pulley 32 and/or the deflection pulley 36 and/or the guiding pulley 38 may be provided with further foam elements 54.

Figure 7 illustrates a schematic enlarged sectional side view of the telescopic hand tool 10 according to the second embodiment of the present invention. Figure 7 shows section E in Figure 6.

The connection between the further pulling means 48 and the pulling means 30 is shown in Figure 7. Preferably, the first end of the further pulling means 48 is connected by the seam 50 to the third portion of the pulling means 30. Alternatively, the first end of the further pulling means 48 is glued on the third portion of the pulling means 30.

Figure 8 illustrates a schematic cross-sectional view of the telescopic hand tool 10 according to the second embodiment of the present invention. Figure 8 shows the cross-section along the plane F-F in Figure 6.

The insulation tube 42 encloses the outer tube 12. Alternatively, the insulation tube 42 and the outer tube 12 are formed as a single-piece part. The groove 40 is formed within the insulation tube 42. The second portion of the pulling means 30 is guided in the groove 40 between the fixation 46 arranged in the pull sleeve 22 and the end sleeve 26. In the second embodiment, the first portion of the pulling means 30 extends only between the first deflection pulley 32 and the fixation 46 arranged in the pull sleeve 22.

Figure 9 illustrates a schematic sectional side view of the telescopic hand tool 10 with operated pull sleeve 22 according to the second embodiment of the present invention.

In Figure 9 the pull sleeve 22 is pulled away from the stop cam 24. Thus, the whole pulling means 30 is stretched. In contrast, the further pulling means 48 is folded. The back handle 28 is attached at the end sleeve 26.

If the back handle 28 is pulled in the second embodiment of the present invention, then the pull sleeve 22 remains in its place. Further, according to the second embodiment, two deflections of the pulling means 30 for the operation of the pull sleeve 22 may be omitted. Thereby, the back handle 28 shows decreased friction losses, particularly significant decreased friction losses.

According to the present invention the tool head 18 may be operated by pulling the pull sleeve 22 and/or the back handle 28. If the back end of the telescopic hand tool 10 is supported by the body of the user or at a suitable place, then the pull sleeve 22 may be pulled by both hands of the user. Only the first portion of the pulling means 30 between the stop cam 24 and the end sleeve 26 is visible. The second portion of the pulling means 30 is covered by the first portion of the pulling means 30. The arrangement of the deflection pulleys allow that the other portions of the pulling means 30 are arranged inside the tube outer tube 12, the intermediate tube 14 and the inner tube 16 of the telescopic hand tool 10. The pulling means 30 is mostly invisible and therefore protected from sunlight, dirt, and mechanical damages.

Preferably, the outer tube 12, the intermediate tube 14 and the inner tube 16 are made of metal, in particular aluminium.

The embodiments of the telescopic hand tool 10 described above include three tubes, namely the outer tube 12, the intermediate tube 14 and the inner tube 16. In general, the telescopic hand tool 10 may include one or more intermediate tubes. The further intermediate tubes comprise two deflection pulleys in each case. One deflection pulley is arranged at the front end and the other one is arranged at the back end of the further intermediate tube.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention. All such changes and modifications are intended to be included within the scope of the invention as defined by the appended claims.

### Reference Numerals

- 10: telescopic hand tool
- 12: outer tube
- 14: intermediate tube
- 16: inner tube
- 18: tool head
- 20: telescopic interface
- 22: pull sleeve
- 24: stop cam
- 26: end sleeve
- 28: back handle
- 30: pulling means
- 32: first deflection pulley
- 34: second deflection pulley
- 36: fifth deflection pulley
- 38: guiding pulley
- 40: groove
- 42: insulation tube
- 44: plastic tube
- 46: fixation
- 48: further pulling means
- 50: seam
- 52: fixation point
- 54: foam element

## Claims

1. Telescopic hand tool (10), in particular a telescopic pruner, the telescopic hand tool (10) comprises:
- an outer tube (12),
- at least one intermediate tube (14) slidable within the outer tube (12),
- an inner tube (16) slidable within the intermediate tube (14),
- at least one tool head (18) connected or connectable to the front end of the inner tube (16),
- a back handle (28) detachably arranged at the back end of the outer tube (12),
- a pull sleeve (22) slidable along the outer tube (12),
- a pulling means (30) having a flat cross-section and arranged substantially inside the tubes (12, 14, 16), wherein the one end portion of the pulling means (30) is connected to a fixation point (52) at the front end of the outer tube (12), while the other end portion of the pulling means (30) is connected to the pull sleeve (22),
- a further pulling means (48) extending between a joint (50) arranged at the pulling means (30) and the back handle (28),
- a number of deflection pulleys (32, 34, 36) arranged at the back ends of the tubes (12, 14, 16) and at the front ends of the outer tube (12) and the intermediate tube (14), wherein the deflection pulleys (32, 34, 36) are provided for redirecting the pulling means (30),
- a hoist pulley slidable within the inner tube (16) and connected to the tool head (18) by a rod, a cord or the like, wherein the hoist pulley is provided for redirecting the pulling means (30), and
- an elongated groove (40) formed in the outer side of the outer tube (12) and extending parallel to said outer tube (12),
- wherein first and second portions of the pulling means (30) are arranged and guided to one another within the groove (40), and
- wherein the first portion of the pulling means (30) is connected to the pull sleeve (22) by a fixation (46).

2. Telescopic hand tool (10) according to claim 1,
**characterised in that**
the first portion of the pulling means (30) extends between the pull sleeve (22) and a first deflection pulley (32) arranged at the front end of the outer tube (12), while the second portion of the pulling means (30) extends between the first deflection pulley (32) and a second deflection pulley (34) arranged at or close to the back end of the outer tube (12).

3. Telescopic hand tool (10) according to claim 1 or 2,
**characterised in that**
the joint (50) is arranged in a third portion of the pulling means (30), wherein said third portion of the pulling means (30) extends between the second deflection pulley (34) and the hoist pulley, wherein preferably the joint (50) is at least one of a seam, a knot, an additional fastening part, and a glue point.

4. Telescopic hand tool (10) according to any one of the preceding claims,
**characterised in that**
the first portion of the pulling means (30) is fixed to the pull sleeve (22) by at least one clamping connection.

5. Telescopic hand tool (10) according to any one of the preceding claims,
**characterised in that**
an insulation tube (42) encloses at least partially the outer tube (12), wherein the groove (40) is formed within said insulation tube (42), and wherein preferably the groove (40) has a rectangular cross-section corresponding with the overall cross-section of the first and second portions of the pulling means (30) arranged one to another.

6. Telescopic hand tool (10) according to any one of the preceding claims,
**characterised in that**
an end sleeve (26) is arranged at the back end of the outer tube (12), wherein preferably the back handle (28) is detachably mounted at the end sleeve (26).

7. Telescopic hand tool (10) according to claim 6,
**characterised in that**
a stop cam (24) is attached at the outer side of the outer tube (12), wherein the pull sleeve (22) is slidable between said stop cam (24) and the end sleeve (26).

8. Telescopic hand tool (10) according to any one of the preceding claims,
**characterised in that**
the telescopic hand tool (10) comprises at least two telescopic interfaces (20), wherein a first telescopic interface (20) connects the outer tube (12) and the intermediate tube (14), while a second telescopic interface connects the intermediate tube (14) and the inner tube (16).

9. Telescopic hand tool (10) according to any one of the preceding claims,
**characterised in that**
a plastic tube (44) encloses partially the outer tube (12) and covers a part of the groove (40), wherein preferably the plastic tube (44) extends between the first telescopic interface (20) and the stop cam (24).

10. Telescopic hand tool (10) according to any one of the preceding claims,
**characterised in that**
the deflection pulleys (32, 34, 36) and/or the hoist pulley are provided for redirecting the pulling means (30) by about 180 degrees.

11. Telescopic hand tool (10) according to any one of the preceding claims,
**characterised in that**
a further guiding pulley is dedicated to at least one deflection pulley (32, 34, 36), so that the pulling means (30) takes an S-shaped course between the further guiding pulley and the corresponding deflection pulley (32, 34, 36).

12. Telescopic hand tool (10) according to any one of the preceding claims,
**characterised by**
at least one foam element (54) provided for guiding the pulling means (30), wherein said foam element (54) corresponds with one deflection pulley (34), so that the pulling means (30) is guided between the foam element (54) and the deflection pulley (34).

13. Telescopic hand tool (10) according to claim 12,
**characterised by**
the foam element (54) is arranged with regard to the deflection pulley (34), so that a curved section of the pulling means (30) is guided between the foam element (54) and the deflection pulley (34).

14. Telescopic hand tool (10) according to claim 12 or 13,
**characterised by**
the foam element (54) corresponds with the second deflection pulley (34), so that the pulling means (30) is guided between the foam element (54) and the second deflection pulley (34).

15. Telescopic hand tool (10) according to any one of the preceding claims,
**characterised in that**
the telescopic hand tool (10) comprises one or more further intermediate tubes, wherein the further intermediate tube includes at least two deflection pulleys arranged at the front end and back end, respectively, of the said further intermediate tube, and wherein the further intermediate tube is arranged between the outer tube (12) and intermediate tube (14) and/or between the intermediate tube (14) and the inner tube (16).

## Patentansprüche

1. Teleskopisches Handwerkzeug (10), insbesondere eine teleskopische Gartenschere, wobei das teleskopische Handwerkzeug (10) umfasst:
- ein Außenrohr (12),
- mindestens ein Zwischenrohr (14), das innerhalb des Außenrohrs (12) verschiebbar ist,
- ein Innenrohr (16), das innerhalb des Zwischenrohrs (14) verschiebbar ist,
- mindestens einen Werkzeugkopf (18), der mit dem vorderen Ende des Innenrohrs (16) verbunden oder verbindbar ist,
- einen hinteren Griff (28), der lösbar an dem hinteren Ende des Außenrohrs (12) angeordnet ist,
- eine Zughülse (22), die entlang des Außenrohrs (12) verschiebbar ist,
- ein Zugmittel (30), das einen flachen Querschnitt aufweist und im Wesentlichen im Inneren der Rohre (12, 14, 16) angeordnet ist, wobei der eine Endabschnitt des Zugmittels (30) mit einem Fixierungspunkt (52) an dem vorderen Ende des Außenrohrs (12) verbunden ist, während der andere Endabschnitt des Zugmittels (30) mit der Zughülse (22) verbunden ist,
- ein weiteres Zugmittel (48), das sich zwischen einem an dem Zugmittel (30) angeordneten Gelenk (50) und dem hinteren Griff (28) erstreckt,
- eine Anzahl von Umlenkrollen (32, 34, 36), die an den hinteren Enden der Rohre (12, 14, 16) und an den vorderen Enden des Außenrohrs (12) und des Zwischenrohrs (14) angeordnet sind, wobei die Umlenkrollen (32, 34, 36) zum Umleiten des Zugmittels (30) bereitgestellt sind,
- eine Hubrolle, die innerhalb des Innenrohrs (16) verschiebbar ist und mit dem Werkzeugkopf (18) durch eine Stange, ein Seil oder dergleichen verbunden ist, wobei die Hubrolle zum Umleiten des Zugmittels (30) bereitgestellt ist, und
- eine längliche Nut (40), die in der Außenseite des Außenrohrs (12) ausgebildet ist und sich parallel zu dem Außenrohr (12) erstreckt,
- wobei erste und zweite Abschnitte des Zugmittels (30) innerhalb der Nut (40) zueinander angeordnet und geführt sind, und
- wobei der erste Abschnitt des Zugmittels (30) mit der Zughülse (22) durch eine Fixierung (46) verbunden ist.

2. Teleskopisches Handwerkzeug (10) nach Anspruch 1,
**dadurch gekennzeichnet, dass**
der erste Abschnitt des Zugmittels (30) sich zwischen der Zughülse (22) und einer ersten Umlenkrolle (32) erstreckt, die an dem vorderen Ende des Außenrohrs (12) angeordnet ist, während sich der zweite Abschnitt des Zugmittels (30) zwischen der ersten Umlenkrolle (32) und einer zweiten Umlenkrolle (34) erstreckt, die an oder nahe zu dem hinteren Ende des Außenrohrs (12) angeordnet ist.

3. Teleskopisches Handwerkzeug (10) nach Anspruch 1 oder 2,
**dadurch gekennzeichnet, dass**
das Gelenk (50) in einem dritten Abschnitt des Zugmittels (30) angeordnet ist, wobei sich der dritte Abschnitt des Zugmittels (30) zwischen der zweiten Umlenkrolle (34) und der Hubrolle erstreckt, wobei vorzugsweise das Gelenk (50) mindestens eines von einer Naht, einem Knoten, einem zusätzlichen Befestigungsteil und einem Klebepunkt ist.

4. Teleskopisches Handwerkzeug (10) nach einem der vorstehenden Ansprüche,
**dadurch gekennzeichnet, dass**
der erste Abschnitt des Zugmittels (30) an der Zughülse (22) durch mindestens eine Klemmverbindung fixiert ist.

5. Teleskopisches Handwerkzeug (10) nach einem der vorstehenden Ansprüche,
**dadurch gekennzeichnet, dass**
ein Isolierrohr (42) das Außenrohr (12) mindestens teilweise umschließt, wobei die Nut (40) innerhalb des Isolierrohrs (42) ausgebildet ist und wobei vorzugsweise die Nut (40) einen rechteckigen Querschnitt aufweist, der dem Gesamtquerschnitt des ersten und des zweiten Abschnitts der zueinander angeordneten Zugmittel (30) entspricht.

6. Teleskopisches Handwerkzeug (10) nach einem der vorstehenden Ansprüche,
**dadurch gekennzeichnet, dass**
eine Endhülse (26) an dem hinteren Ende des Außenrohrs (12) angeordnet ist, wobei vorzugsweise der hintere Griff (28) lösbar an der Endhülse (26) montiert ist.

7. Teleskopisches Handwerkzeug (10) nach Anspruch 6,
**dadurch gekennzeichnet, dass**
ein Anschlagnocken (24) an der Außenseite des Außenrohrs (12) angebracht ist, wobei die Zughülse (22) zwischen dem Anschlagnocken (24) und der Endhülse (26) verschiebbar ist.

8. Teleskopisches Handwerkzeug (10) nach einem der vorstehenden Ansprüche,
**dadurch gekennzeichnet, dass**
das teleskopische Handwerkzeug (10) mindestens zwei teleskopische Schnittstellen (20) umfasst, wobei eine erste teleskopische Schnittstelle (20) das Außenrohr (12) und das Zwischenrohr (14) verbindet, während eine zweite teleskopische Schnittstelle das Zwischenrohr (14) und das Innenrohr (16) verbindet.

9. Teleskopisches Handwerkzeug (10) nach einem der vorstehenden Ansprüche,
**dadurch gekennzeichnet, dass**
ein Kunststoffrohr (44) das Außenrohr (12) teilweise umschließt und einen Teil der Nut (40) abdeckt, wobei vorzugsweise das Kunststoffrohr (44) sich zwischen der ersten teleskopischen Schnittstelle (20) und dem Anschlagnocken (24) erstreckt.

10. Teleskopisches Handwerkzeug (10) nach einem der vorstehenden Ansprüche,
**dadurch gekennzeichnet, dass**
die Umlenkrollen (32, 34, 36) und/oder die Hubrolle zum Umleiten des Zugmittels (30) um etwa 180 Grad bereitgestellt sind.

11. Teleskopisches Handwerkzeug (10) nach einem der vorstehenden Ansprüche,
**dadurch gekennzeichnet, dass**
eine weitere Führungsrolle mindestens einer Umlenkrolle (32, 34, 36) zugeordnet ist, so dass das Zugmittel (30) einen S-förmigen Verlauf zwischen der weiteren Führungsrolle und der entsprechenden Umlenkrolle (32, 34, 36) nimmt.

12. Teleskopisches Handwerkzeug (10) nach einem der vorstehenden Ansprüche,
**gekennzeichnet durch**
mindestens ein Schaumelement (54), das zum Führen des Zugmittels (30) bereitgestellt ist, wobei das Schaumelement (54) einer Umlenkrolle (34) entspricht, so dass das Zugmittel (30) zwischen dem Schaumelement (54) und der Umlenkrolle (34) geführt wird.

13. Teleskopisches Handwerkzeug (10) nach Anspruch 12,
**dadurch gekennzeichnet, dass**
das Schaumelement (54)bezüglich der Umlenkrolle (34) so angeordnet ist, dass ein gekrümmter Abschnitt des Zugmittels (30) zwischen dem Schaumelement (54) und der Umlenkrolle (34) geführt ist.

14. Teleskopisches Handwerkzeug (10) nach Anspruch 12 oder 13,
**dadurch gekennzeichnet, dass**
das Schaumelement (54) der zweiten Umlenkrolle (34) entspricht, so dass das Zugmittel (30) zwischen dem Schaumelement (54) und der zweiten Umlenkrolle (34) geführt ist.

15. Teleskopisches Handwerkzeug (10) nach einem der vorstehenden Ansprüche,
**dadurch gekennzeichnet, dass**
das teleskopische Handwerkzeug (10) ein oder mehrere weitere Zwischenrohre umfasst, wobei das weitere Zwischenrohr mindestens zwei Umlenkrollen einschließt, die an dem vorderen Ende bzw. an dem hinteren Ende des weiteren Zwischenrohrs angeordnet sind, und wobei das weitere Zwischenrohr zwischen dem Außenrohr (12) und dem Zwischenrohr (14) und/oder zwischen dem Zwischenrohr (14) und dem Innenrohr (16) angeordnet ist.

## Revendications

1. Outil à main télescopique (10), en particulier un sécateur télescopique, l'outil à main télescopique (10) comprend :
- un tube externe (12),
- au moins un tube intermédiaire (14) pouvant coulisser à l'intérieur du tube externe (12),
- un tube interne (16) pouvant coulisser à l'intérieur du tube intermédiaire (14),
- au moins une tête d'outil (18) reliée ou pouvant être reliée à l'extrémité avant du tube interne (16),
- une poignée arrière (28) agencée de manière amovible au niveau de l'extrémité arrière du tube externe (12),
- un manchon de traction (22) pouvant coulisser le long du tube externe (12),
- un moyen de traction (30) ayant une section transversale plate et agencé sensiblement à l'intérieur des tubes (12, 14, 16), dans lequel une partie extrémité du moyen de traction (30) est reliée à un point de fixation (52) au niveau de l'extrémité avant du tube externe (12), tandis que l'autre partie extrémité du moyen de traction (30) est reliée au manchon de traction (22),
- un moyen de traction supplémentaire (48) s'étendant entre une articulation (50) agencée au niveau du moyen de traction (30) et la poignée arrière (28),
- un certain nombre de poulies de renvoi (32, 34, 36) agencées au niveau des extrémités arrière des tubes (12, 14, 16) et au niveau des extrémités avant du tube externe (12) et du tube intermédiaire (14), dans lequel les poulies de renvoi (32, 34, 36) sont prévues pour rediriger le moyen de traction (30),
- une poulie de levage pouvant coulisser à l'intérieur du tube interne (16) et reliée à la tête d'outil (18) par une tige, une corde ou similaire, dans lequel la poulie de levage est prévue pour rediriger le moyen de traction (30), et
- une rainure allongée (40) formée dans le côté externe du tube externe (12) et s'étendant parallèlement audit tube externe (12),
- dans lequel des première et deuxième parties du moyen de traction (30) sont agencées et guidées l'une par rapport à l'autre à l'intérieur de la rainure (40), et
- dans lequel la première partie du moyen de traction (30) est reliée au manchon de traction (22) par une fixation (46).

2. Outil à main télescopique (10) selon la revendication 1,
**caractérisé en ce que**
la première partie du moyen de traction (30) s'étend entre le manchon de traction (22) et une première poulie de renvoi (32) agencée au niveau de l'extrémité avant du tube externe (12), tandis que la deuxième partie du moyen de traction (30) s'étend entre la première poulie de renvoi (32) et une seconde poulie de renvoi (34) agencée au niveau ou à proximité de l'extrémité arrière du tube externe (12).

3. Outil à main télescopique (10) selon la revendication 1 ou 2,
**caractérisé en ce que**
l'articulation (50) est agencée dans une troisième partie du moyen de traction (30), dans lequel ladite troisième partie du moyen de traction (30) s'étend entre la seconde poulie de renvoi (34) et la poulie de levage, dans lequel, de préférence, l'articulation (50) est au moins l'un parmi une couture, un nœud, une partie de fixation supplémentaire et un point de colle.

4. Outil à main télescopique (10) selon l'une quelconque des revendications précédentes,
**caractérisé en ce que**
la première partie du moyen de traction (30) est fixée au manchon de traction (22) par au moins une liaison par serrage.

5. Outil à main télescopique (10) selon l'une quelconque des revendications précédentes,
**caractérisé en ce que**
un tube d'isolation (42) entoure au moins partiellement le tube externe (12), dans lequel la rainure (40) est formée à l'intérieur dudit tube d'isolation (42), et dans lequel, de préférence, la rainure (40) a une section transversale rectangulaire correspondant à la section transversale globale des première et deuxième parties du moyen de traction (30) agencées l'une par rapport à l'autre.

6. Outil à main télescopique (10) selon l'une quelconque des revendications précédentes,
**caractérisé en ce que**
un manchon d'extrémité (26) est agencé au niveau de l'extrémité arrière du tube externe (12), dans lequel, de préférence, la poignée arrière (28) est montée de manière amovible au niveau du manchon d'extrémité (26).

7. Outil à main télescopique (10) selon la revendication 6,
**caractérisé en ce que**
une came d'arrêt (24) est attachée au niveau du côté externe du tube externe (12), dans lequel le manchon de traction (22) peut coulisser entre ladite came d'arrêt (24) et le manchon d'extrémité (26).

8. Outil à main télescopique (10) selon l'une quelconque des revendications précédentes,
**caractérisé en ce que**
l'outil à main télescopique (10) comprend au moins deux interfaces télescopiques (20), dans lequel une première interface télescopique (20) relie le tube externe (12) et le tube intermédiaire (14), tandis qu'une seconde interface télescopique relie le tube intermédiaire (14) et le tube interne (16).

9. Outil à main télescopique (10) selon l'une quelconque des revendications précédentes,
**caractérisé en ce que**
un tube en plastique (44) entoure partiellement le tube externe (12) et recouvre une partie de la rainure (40), dans lequel, de préférence, le tube en plastique (44) s'étend entre la première interface télescopique (20) et la came d'arrêt (24).

10. Outil à main télescopique (10) selon l'une quelconque des revendications précédentes,
**caractérisé en ce que**
les poulies de renvoi (32, 34, 36) et/ou la poulie de levage sont prévues pour rediriger le moyen de traction (30) d'environ 180 degrés.

11. Outil à main télescopique (10) selon l'une quelconque des revendications précédentes,
**caractérisé en ce que**
une poulie de guidage supplémentaire est dédiée à au moins une poulie de renvoi (32, 34, 36), de sorte que le moyen de traction (30) suit un parcours en forme de S entre la poulie de guidage supplémentaire et la poulie de renvoi (32, 34, 36) correspondante.

12. Outil à main télescopique (10) selon l'une quelconque des revendications précédentes,
**caractérisé par**
au moins un élément en mousse (54) prévu pour guider le moyen de traction (30), dans lequel ledit élément en mousse (54) correspond à une poulie de renvoi (34), de sorte que le moyen de traction (30) est guidé entre l'élément en mousse (54) et la poulie de renvoi (34).

13. Outil à main télescopique (10) selon la revendication 12,
**caractérisé par**
l'élément en mousse (54) est agencé par rapport à la poulie de renvoi (34), de sorte qu'une section incurvée du moyen de traction (30) est guidée entre l'élément en mousse (54) et la poulie de renvoi (34).

14. Outil à main télescopique (10) selon la revendication 12 ou 13,
**caractérisé par**
l'élément en mousse (54) correspond à la seconde poulie de renvoi (34), de sorte que le moyen de traction (30) est guidé entre l'élément en mousse (54) et la seconde poulie de renvoi (34).

15. Outil à main télescopique (10) selon l'une quelconque des revendications précédentes,
**caractérisé en ce que**
l'outil à main télescopique (10) comprend un ou plusieurs autres tubes intermédiaires, dans lequel l'autre tube intermédiaire comporte au moins deux poulies de renvoi agencées au niveau de l'extrémité avant et de l'extrémité arrière, respectivement, dudit autre tube intermédiaire, et dans lequel l'autre tube intermédiaire est agencé entre le tube externe (12) et le tube intermédiaire (14) et/ou entre le tube intermédiaire (14) et le tube interne (16).
